# EUROPÄISCHE PATENTANMELDUNG

(11) **EP 3 888 843 A1**
(43) Veröffentlichungstag der Anmeldung: **06.10.2021**
(21) Anmeldenummer: 20167185.6
(22) Anmeldetag: 31.03.2020
(51) Int. Cl.: B23Q 1/01, B23Q 1/44, B23Q 1/54, B23Q 11/00

(54) **MOBILE WERKZEUGMASCHINE**

(71) Anmelder: Picum MT GmbH, 30419 Hannover (DE)
(72) Erfinder: BROUWER; Dominik, 30938 Burgwedel (DE)
(74) Vertreter: Gramm, Lins & Partner Patent- und Rechtsanwälte PartGmbB

(57) **Zusammenfassung**

Die Erfindung betrifft eine mobile Werkzeugmaschine (10) mit (a) einem Grundkörper (12), mit dem die Werkzeugmaschine (10) auf dem Boden (48) steht, (b) einem Maschinenbett-Kopf (14), der relativ zum Grundkörper (12) auskragend befestigt ist, und (c) einem Endeffektor (16), der mittels eines Positioniersystems (18) am Maschinenbett-Kopf (14) geführt ist. Erfindungsgemäß ist vorgesehen, dass der Maschinenbett-Kopf (14) mittels eines mechanisch überbestimmten Stabwerks (24) am Grundkörper (12) befestigt ist.

## Beschreibung

Die Erfindung betrifft eine mobile Werkzeugmaschine mit (a) einem Grundkörper, bei dem die Werkzeugmaschine auf dem Boden steht, (b) einem Maschinenbett-Kopf, der relativ zum Grundkörper auskragend befestigt ist, und (c) einem Endeffektor, der mittels eines Positioniersystems am Maschinenbett-Kopf geführt ist. Eine derartige mobile Werkzeugmaschine kann beispielsweise dazu verwendet werden, um zu einem Gesenk gefahren zu werden und das Gesenk vor Ort zu bearbeiten.

Günstig, wenngleich nicht notwendig ist es, wenn der Maschinenbett-Kopf einen möglichst großen Arbeitsbereich relativ zum Grundkörper aufweist. Der Arbeitsbereich ist die Menge all derjenige Punkte, die vom Endeffektor zum Bearbeiten erreichbar sind. Wünschenswert ist zudem, dass eine Eigenfrequenz einer Schwingung des Endeffektors möglichst hoch liegt und eine Steifigkeit bezüglich einer Auslenkung des Endeffektors relativ zum zu bearbeitenden Werkstück möglichst hoch ist.

Diese wünschenswerten Eigenschaften stehen jedoch in einem Konkurrenzverhältnis zueinander. Je höher nämlich die Steifigkeit und die Eigenfrequenz sind, desto kleiner ist in der Regel der Arbeitsraum. Zudem führen eine hohe Steifigkeit und eine hohe Eigenfrequenz in der Regel zu komplexen und damit kostenintensiven Werkzeugmaschinen.

Der Erfindung liegt die Aufgabe zugrunde, eine verbesserte mobile Werkzeugmaschine vorzuschlagen.

Die Erfindung löst das Problem durch eine gattungsgemäße Werkzeugmaschine, bei der der Maschinenbett-Kopf mittels eines mechanisch überbestimmten Stabwerks am Grundkörper befestig ist.

Vorteilhaft an einer derartigen Werkzeugmaschine ist, dass der Maschinenbett-Kopf mit einer hohen Steifigkeit am Grundkörper befestigt werden kann.

Ist das Stabwerk, wie gemäß einer bevorzugten Ausführungsform vorgesehen, so ausgebildet, dass durch Verlängern zumindest eines der Stäbe die Position des Maschinenbett-Kopfs relativ zum Grundkörper veränderbar ist, so kann der Maschinenbett-Kopf mittels des Stabwerks auf eine vorgegebene Position justiert werden. Das vergrößert den Arbeitsbereich des Maschinenbett-Kopfes.

Durch Verwendung des überbestimmten Stabwerks wirken auf dessen Streben im Wesentlichen nur Zug- und/oder Druckkräfte und keine oder nur vernachlässigbar kleine Biegekräfte. Das führt in der Regel zu einer hohen Steifigkeit bei kleiner Masse. Zudem kann oft ein modularer und damit einfacher Aufbau erreicht werden.

Im Rahmen der vorliegenden Beschreibung wird unter dem Grundkörper insbesondere der Teil der Werkzeugmaschine verstanden, der auf dem Boden steht.

Unter dem Maschinenbett-Kopf wird ein Bestandteil der Werkzeugmaschine verstanden, an dem der Endeffektor mittels des Positioniersystems geführt ist. Das Positioniersystem ist ein Teil des Maschinenbett-Kopfs. Der Maschinenbett-Kopf ist mittels des Stabwerks am Grundkörper befestigt. Vorzugsweise beträgt ein Abstand zwischen dem Maschinenbett-Kopf und dem Grundkörper zumindest 50 cm, insbesondere zumindest 100 cm, vorzugsweise zumindest 150 cm.

Unter dem Merkmal, dass der Maschinenbett-Kopf relativ zum Grundkörper auskragend befestigt ist, wird insbesondere verstanden, dass der Maschinenbett-Kopf so am Grundkörper befestigt ist, dass der Grundkörper an ein Unterwerkzeug eines Gesenks herangefahren werden und der Endeffektor in dieser Stellung eine Oberfläche des Unterwerkzeugs bearbeiten kann. Günstig, nicht aber notwendig ist es, wenn unterhalb des Maschinenbett-Kopfs kein weiteres Element der Werkzeugmaschine angeordnet ist.

Unter dem Merkmal, das das Stabwerk mechanisch überbestimmt ist, wird insbesondere verstanden, dass eine Verlängerung einer der Streben zu Zwangskräften an zumindest einer anderen Strebe, insbesondere an zumindest zwei weiteren Streben, führt. Ein mechanisch überbestimmtes Stabwerk könnte auch als statisch unbestimmtes Stabwerk bezeichnet werden. Insbesondere ist der Grad n der Unbestimmheit zumindest n=2.

Unter dem Endeffektor wird das letzte Glied einer kinematischen Kette bezeichnet. Der Endeffektor ist vorzugsweise eine Einheit zum Schweißen, Drucken, Fräsen, Polieren, Klopfen oder Härten oder Laserbearbeiten.

Günstig ist es, wenn das Stabwerk eine Hexapodstruktur bildet. Insbesondere besitzt das Stabwerk zumindest 6 Stäbe, die eine Parallelkinematik bilden, das heißt, dass eine zumindest gedachte Verlängerung eines der Stäbe zu einer Bewegung des Maschinenbett-Kopfs in zumindest einem Freiheitsgrad führt. Es sei darauf hingewiesen, dass es günstig, nicht aber notwendig ist, dass zumindest ein Teil der Streben des Stabwerks längenveränderlich ist.

Gemäß einer bevorzugten Ausführungsform unterscheiden sich die Streben in ihren Eigenfrequenzen um zumindest 3%, insbesondere zumindest 5%, besonders bevorzugt zumindest 10%. Auf diese Weise ergibt sich für das gesamte Stabwerk eine hinreichend hohe Dämpfung bei allen Anregungsfrequenzen, die am Endeffektor anliegen.

Vorzugsweise unterscheiden sich zumindest 4 Streben in ihren Eigenfrequenzen paarweise um zumindest 5%, insbesondere zumindest 7%, besonders bevorzugt zumindest 10%. Unter diesem Merkmal wird insbesondere verstanden, dass für jede Eigenfrequenz gilt, dass jede andere Eigenfrequenz einer anderen Strebe sich um zumindest die angegebene Prozentzahl, beispielsweise 5%, von dieser Eigenfrequenz unterscheidet. Diese Prozentzahl wird berechnet, indem die größere Eigenfrequenz durch die kleine Eigenfrequenz dividiert wird.

Besonders günstig ist es, wenn sich alle Streben in ihren Eigenfrequenzen paarweise um zumindest 3%, insbesondere zumindest 5%, besonders bevorzugt zumindest 7% unterscheiden.

Vorzugsweise ist das Stabwerk zumindest zweifach überbestimmt, insbesondere höchstens vierfach überbestimmt. Eine zumindest doppelte Überbestimmung führt zu einer besonders hohen Steifigkeit. Eine mehr als vierfache mechanische Überbestimmung führt zu einem vergleichsweise aufwändigen Stabwerk.

Günstig ist es, wenn zumindest eine der Streben eine Vorspannvorrichtung aufweist, mittels der die Strebe gegen die anderen Streben verspannbar ist. Hat das Stabwerk N Streben, ist es günstig, wenn zumindest (N-6) Streben eine Vorspannvorrichtung aufweisen. Insbesondere ist es möglich und bevorzugt, wenn alle Streben eine Vorspannvorrichtung aufweisen oder aber alle bis auf eine der Streben eine Vorspannvorrichtung aufweisen.

Unter der Vorspannvorrichtung wird eine Vorrichtung verstanden, mittels der die Länge der jeweiligen Strebe veränderbar ist. Auf diese Weise ist diese Strebe gegen die anderen Streben verspannbar. Die Vorspannvorrichtung kann beispielsweise einen Gewindetrieb aufweisen. Beispielsweise kann durch Drehen eines Bauteils der Vorspannvorrichtung, das beispielsweise ein Innengewinde aufweist, dieses Bauteil gegenüber einem anderen Bauteil, das im gewählten Beispiel ein Außengewinde hat, verschoben werden. Derartige Vorspannvorrichtungen sind besonders einfach aufgebaut. Es ist jedoch beispielsweise auch möglich, dass die Vorspannvorrichtung einen Zylinder, insbesondere einen Hydraulikzylinder, aufweist.

Alle Streben haben vorzugsweise einen Fußpunkt, mit dem sie am Grundkörper befestigt sind, sowie einen Kopfpunkt, mittels dem sie am Maschinenbett-Kopf befestigt sind.

Günstig ist es, wenn zumindest vier der Streben am Grundkörper angelenkt sind. Vorzugsweise hat das Gelenk, mittels dem die jeweilige Strebe am Grundkörper ist, zumindest zwei Freiheitsgrade. Das heißt, dass die Strebe in zwei Freiheitsgraden, vorzugsweise Schwenkfreiheitsgraden, relativ zum Grundkörper bewegbar ist. Besonders günstig ist es, wenn es sich bei dem Gelenk um ein Kugelgelenk handelt. Ein Kugelgelenk erlaubt eine Bewegung in drei Freiheitsgraden, nämlich zwei Freiheitsgraden bezüglich einer Schwenkbewegung und einem Drehfreiheitsgrad um eine Drehachse des Kugelgelenks.

Günstig ist es, wenn das Positioniersystem zumindest drei Achsen aufweist. In anderen Worten ist der Endeffektor relativ zum Maschinenbett-Kopf in zumindest drei Freiheitsgraden bewegbar. Vorzugsweise handelt es sich bei den Freiheitsgraden um drei Translationsfreiheitsgrade. In diesem Fall kann der Endeffektor relativ zum Maschinenbett-Kopf in drei Freiheitsgraden verschoben werden.

Vorzugsweise umfasst die mobile Werkzeugmaschine eine Drehvorrichtung, mittels der der Maschinenbett-Kopf relativ zum Grundkörper drehbar, insbesondere um zumindest 170°, vorzugsweise zumindest 180°, drehbar gelagert ist. Bei der Bearbeitung von Gesenken ist es vorteilhaft, wenn sowohl das Oberwerkzeug als auch das Unterwerkzeug mittels der gleichen mobilen Werkzeugmaschine bearbeitet werden kann. Dazu ist es vorteilhaft, wenn der Maschinenbett-Kopf mittels der Drehvorrichtung so geschwenkt werden kann, dass er bei ansonsten unveränderter Position der Werkzeugmaschine nach Bearbeiten des Unterwerkzeuges durch Betätigen der Drehvorrichtung das Oberwerkzeug bearbeiten kann.

Besonders günstig ist es, wenn die Drehvorrichtung in der kinematischen Kette zwischen dem Maschinenbett-Kopf und dem Stabwerk angeordnet ist.

Vorzugsweise besitzt die mobile Werkzeugmaschine eine Vorspannvorrichtung, die mit einem Ende am Maschinenbett-Kopf und mit dem anderen Ende am Grundkörper befestigt ist und mittels der das Stabwerk und die Drehvorrichtung verspannbar sind.

Beispielsweise kann die Drehvorrichtung ein Wälzlager oder ein Gleitlager aufweisen, mittels dem ein maschinenkopfseitiges Teil mit einem grundkörperseitigen Teil verbunden ist, wobei die Verspannvorrichtung durch dieses Lager hindurch greift. Durch Spannen der Verspannvorrichtung wird keine Zugkraft zwischen Maschinenbett-Kopf und Grundkörper aufgebaut werden, wodurch der maschinenkopfseitige Teil der Drehvorrichtung und der grundkörperseitige Teil der Drehvorrichtung gegeneinander verspannt werden.

Die Erfindung löst das Problem zudem durch eine mobile Werkzeugmaschine mit (a) einem Grundkörper, mit dem die Werkzeugmaschine auf dem Boden steht (b) einem Maschinenbett-Kopf, der relativ zum Grundkörper auskragend befestigt ist, und (c) einem Endeffektor, der mittels eines Positioniersystems am Maschinenbett-Kopf geführt ist, wobei die mobile Werkzeugmaschine ein Fahrwerk aufweist, mittels dem die Werkzeugmaschine bewegbar ist. Es ist vorteilhaft, nicht aber notwendig, dass in diesem Fall der Maschinenbett-Kopf mittels eines mechanisch überbestimmten Stabwerks am Grundkörper befestigt ist. Alle oben genannten bevorzugten Ausführungsformen gelten auch für diese Erfindung. Alle im Folgenden beschriebenen Ausführungsformen gelten auch für die oben beschriebene Erfindung.

Vorteilhaft an dieser Werkzeugmaschine ist, dass der Aktionsbereich, in dem der Endeffektor ein Werkstück bearbeiten kann, deutlich vergrößert wird. Dazu kann die Werkzeugmaschine mittels des Fahrwerks relativ zum Boden bewegt werden.

Üblicherweise sind Werkzeugmaschinen ortsfest, damit sie eine möglichst hohe Eigenfrequenz haben und/oder möglichst steif sind. Es hat sich jedoch herausgestellt, dass ein Fahrwerk vorteilhaft ist, insbesondere dann, wenn bei der Bearbeitung des Werkstücks keine übermäßig großen statischen und dynamischen Kräfte auftreten und/oder die Anforderungen an die Positioniergenauigkeit des Endeffektors hinreichend klein sind und/oder die Bewegung des Endeffektors relativ zum Werkstück nur kleine Beschleunigungen erfordert.

Im Rahmen der vorliegenden Beschreibung wird unter einem Fahrwerk eine Vorrichtung verstanden, mittels der die Werkzeugmaschine bewegbar ist.

In anderen Worten setzt sich die Bewegung des Endeffektors im Raum, also relativ zu einem ortsfesten Koordinatensystem, zusammen aus der Bewegung des Maschinenbett-Kopfs, die durch das Fahrwerk verursacht wird, und der Bewegung des Endeffektors relativ zum Maschinenbett-Kopf, der durch Ansteuern des Positioniersystems verursacht wird. Der Begriff der Kurve und der Trajektorie sind dabei inhaltlich gleich, wobei der Begriff der Kurve verwendet wird, um eine Bewegung in einem Maschinenbett-Kopf-Koordinatensystem zu beschreiben, die sich auf ein Koordinatensystem bezieht, das ortsfest zum Maschinenbett-Kopf ist. Dadurch, dass das Fahrwerk die Werkzeugmaschine um vergleichsweise große Abstände verfahren kann, wird erreicht, dass der Endeffektor bezogen auf den Raum einen großen Arbeitsbereich hat.

Vorzugsweise umfasst das Verfahren den Schritt (v) Bearbeiten des Werkstücks, insbesondere durch Auftragsschweißen, während der Endeffektor entlang der Endeffektor-Kurve bewegt wird.

Vorzugsweise besitzt die Werkzeugmaschine eine Steuerung, die eingerichtet ist zum automatischen Durchführen eines Verfahrens mit den Schritten (i) Erfassen einer Ziel-Trajektorie des Endeffektors im Raum, (ii) Ansteuern des Fahrwerks, sodass sich die Werkzeugmaschine entlang einer Fahrwerk-Trajektorie im Raum bewegt und Ansteuern des Positioniersystems, sodass sich der Endeffektor entlang einer Endeffektor-Kurve relativ zum Maschinenbett-Kopf bewegt, sodass sich der Endeffektor entlang der Ziel-Trajektorie im Raum bewegt.

Besonders günstig ist es, wenn der Endeffektor ein Auftragsschweißkopf ist. Auftragsschweißen ist eine Bearbeitung, bei der Material auf das Werkstück aufgeschweißt wird. Beim Auftragsschweißen werden die in der Regel lediglich moderate Anforderungen an die Positioniergenauigkeit des Endeffektors gestellt. Etwaige Positionierunsicherheiten, die aus der Bewegung der Werkzeugmaschine mittels des Fahrwerks resultieren, sind daher tolerabel.

Gemäß einer bevorzugten Ausführungsform besitzt das Fahrwerk zumindest ein Mecanum-Rad und/oder ein Allseiten-Rad. Auf diese Weise ist es möglich, die Werkzeugmaschine in eine beliebige Richtung zu verfahren und um eine, in der Regel vertikale, Drehachse zu drehen.

Besonders günstig ist es, wenn das Fahrwerk in eine Absetz-Position bringbar ist, in der die Gewichtskraft der Werkzeugmaschine zu zumindest 80% nicht über das Fahrwerk in den Boden eingeleitet wird, sondern über eine Aufsetzfläche, mit der der Grundkörper nach dem Absetzen auf dem Boden steht. Das Fahrwerk ist zudem in eine Fahr-Position bringbar, in der die Werkzeugmaschine mittels des Fahrwerks bewegbar ist.

Besonders günstig ist es, wenn die Werkzeugmaschine ein Tracking-Interferometer aufweist, das ausgebildet ist zum Bestimmen einer Endeffektor-Position. Diese Endeffektor-Position ist vorzugsweise die Position im Raum, das heißt relativ zu einem ortsfesten Koordinatensystem. Die Endeffektor-Position kann auch in einem Koordinatensystem bestimmt werden, das fest bezüglich des Werkstücks ist. Da das Werkstück ortsfest ist, ist auch eine Endeffektor-Position bezüglich eines Koordinatensystems, das relativ zum Werkstück fest ist, raumfest.

Vorteilhaft an dem Tracking-Interferometer ist, dass die Position des Endeffektors im Raum und damit relativ zum Werkstück mit hoher Genauigkeit bestimmt werden kann. Eine Abweichung der Endeffektor-Ist-Position von einer Endeffektor-Soll-Position, die durch die Ziel-Trajektorie angegeben ist, kann dann mittels des Positioniersystems ausgeglichen werden.

Günstig ist es, wenn die Steuerung eingerichtet ist zum automatischen Durchführen eines Verfahrens mit den Schritten (i) kontinuierlich Erfassen einer Endeffektor-Position des Endeffektors im Raum mittels des Tracking-Interferometers und (ii) Regeln der Endeffektor-Position auf eine Endeffektor-Soll-Position gemäß der Ziel-Trajektorie mittels des Positioniersystems.

Günstig ist es beispielsweise, wenn in der Steuerung zwei Regelkreise existieren. Der erste Regelkreis erfasst eine Endeffektor-Relativposition in den Koordinaten des Maschinenbett-Kopfs und regelt die Achsantriebe der Antriebsachsen der Positioniereinheit so, dass sich der Endeffektor entlang der Endeffektor-Trajektorie, die im Maschinenkopf-Koordinatensystem angegeben ist, bewegt. Diese Regelschleife kann als Basis-Regelschleife bezeichnet werden.

Erfasst die Steuerung eine Abweichung der Endeffektor-Ist-Position auf Basis der Messung des Tracking-Interferometers, so verändert die Steuerung die Basis-Regelschleife so, dass eine Abweichung der Ist-Position von der Soll-Position, die von der Ziel-Trajektorie beschrieben wird, vermindert wird. Beispielsweise wird die Endeffektor-Trajektorie angepasst oder ein Offset-Wert zur Endeffektor-Trajektorie hinzuaddiert.

Vorzugsweise ist die Steuerung eingerichtet zum automatischen Durchführen eines Verfahrens mit den Schritten (i) Ansteuern des Fahrwerks, sodass sich die Werkzeugmaschine relativ zum Boden bewegt, (ii) Ansteuern des Fahrwerks, sodass der Grundkörper auf den Boden gestellt wird, (iii) Bestimmen einer Endeffektor-Position des Endeffektors relativ zu einem Werkstück, insbesondere mittels des Tracking-Interferometers, und (iv) Bearbeiten, insbesondere spanendes Bearbeiten, des Werkstücks mittels des Endeffektors.

Vorzugsweise wird zunächst das Werkstück durch Auftragsschweißen bearbeitet, während das Fahrwerk die Werkzeugmaschine - und vorzugsweise zudem die Kinematik den Endeffektor - bewegt, danach wird wie oben beschrieben das Fahrwerk in die Absetz-Position gebracht und dann das Werkstück, insbesondere in dem Bereich, der Auftrag geschweißt wurde, spanend bearbeitet, beispielsweise gefräst und/oder poliert.

Um die Eigenfrequenz der mobilen Werkzeugmaschine erhöhen zu können und gleichzeitig das Gewicht der Werkzeugmaschine hinreichend klein zu halten, um sie über längere Strecken von beispielsweise mehr als einem Kilometer einfach transportieren zu können, ist es günstig, wenn die Werkzeugmaschine ein Beschwerungselement aufweist, das am Grundkörper lösbar befestigt ist, das Beschwerungselement hat vorzugsweise eine Masse von zumindest 300 Kilogramm, insbesondere zumindest 500 Gramm. Vorzugsweise besteht das Beschwerungselement zumindest überwiegend aus einem Material, dessen Dichte 1 Gramm pro Kubikzentimeter, insbesondere 7,5 Gramm pro Kubikzentimeter überschreitet und vorzugsweise 10 Gramm pro Kubikzentimeter überschreitet.

Erfindungsgemäß ist zudem ein Verfahren zum Bearbeiten eines Werkstücks mittels einer erfindungsgemäßen Werkzeugmaschine vorgesehen. Die bevorzugten Ausgestaltungen dieses Verfahrens sind die oben beschriebenen Verfahrensschritte.

Im Folgenden wird die Erfindung anhand der beigefügten Zeichnung näher erläutert. Dabei zeigt
- Figur 1: eine erfindungsgemäße Werkzeugmaschine und
- Figur 2: eine Detailansicht einer Strebe und
- Figur 3: die erfindungsgemäße Werkzeugmaschine nach Figur 1 bei der Bearbeitung eines Werkstücks.

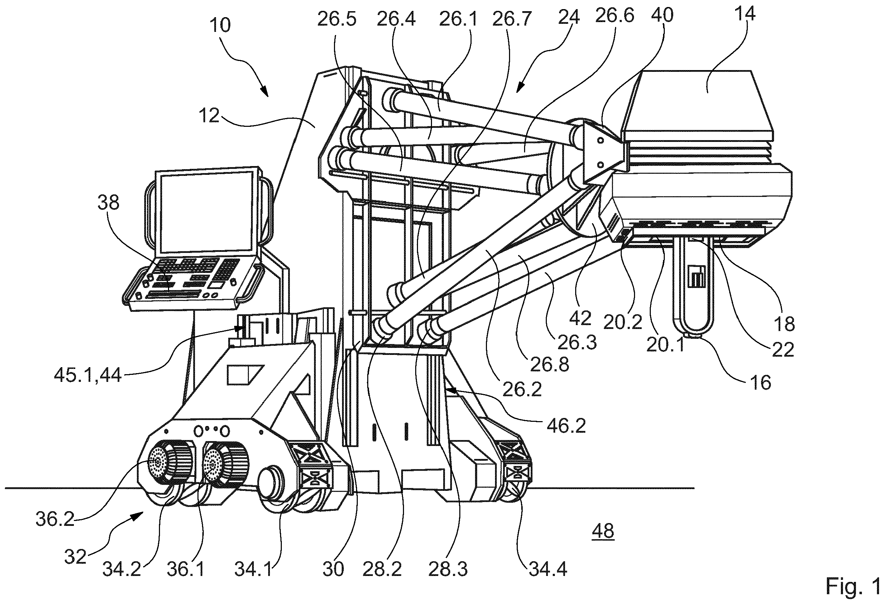

Figur 1 zeigt eine erfindungsgemäße Werkzeugmaschine 10, die einen Grundkörper 12, einen Maschinenbett-Kopf 14 und einen Endeffektor 16 aufweist. Der Endeffektor 16 ist mittels eines Positioniersystems 18 positionierbar. Im vorliegenden Fall ist das Positioniersystem gebildet durch eine erste Linearachse 20.1 und eine zweite Linearachse 20.2, sodass der Endeffektor 16 in zwei Translationsfreiheitsgraden positionierbar ist. Das Positioniersystem 18 kann weiterhin eine Dreheinheit 22 aufweisen, mittels der der Endeffektor in einem Drehfreiheitsgrad bewegbar ist.

Der Grundkörper 12 besitzt ein Stabwerk 24, mittels dem der Maschinenbett-Kopf 14 mit dem Grundkörper 12 verbunden ist. Das Stabwerk 24 umfasst mehrere Streben 26.i (i = 1, 2, ..., N). Die Streben 26.i bilden eine mechanisch überbestimmte Hexapodstruktur. Unabhängig von den anderen Eigenschaften kann die Werkzeugmaschine 10 gemäß einer bevorzugten Ausführungsform eine dritte Linearachse 20.3 aufweisen, mittels der das Stabwerk 24 höhenveränderbar ist.

Jede Strebe 26.i besitzt einen Fußpunkt 28.i, mittels dem sie am Grundkörper befestigt ist. Im vorliegenden Fall weist die Werkzeugmaschine 12 einen Schlitten 30 auf, an denen die Streben 26.i mit ihren jeweiligen Fußpunkten 28.i befestigt sind. Der Schlitten 30 ist in vertikaler Richtung verschieblich am Grundkörper 12 befestigt. Zum Bewegen des Schlittens 30 besitzt die Werkzeugmaschine 10 einen Antrieb, der in Figur 1 nicht eingezeichnet ist.

Die Werkzeugmaschine 10 besitzt ein Fahrwerk 32. Im vorliegenden Fall besitzt das Fahrwerk 4 Mecanum-Räder 34.j (j = 1, 2, 3, 4). Jedes Mecanum-Rad 34.j ist mittels eines Elektromotors 36.j individuell angetrieben, sodass die Werkzeugmaschine 10 in zwei Translationsfreiheitsgraden sowie einem Rotationsfreiheitsgrad bewegbar ist.

Die Werkzeugmaschine 10 besitzt eine Steuerung 38, mittels der die Elektromotoren 36.i sowie das Positioniersystem 18 angesteuert werden.

In der kinematischen Kette zwischen dem Maschinenbett-Kopf und dem Grundkörper 12 ist eine Drehvorrichtung 40 angeordnet. Die Streben 26.1, 26.2, 26.3 sind maschinenbett-kopfseitig an der Drehvorrichtung 40 befestigt. Die Streben 26.4..., 26.8 sind an einem grundkörperseitigen Teil 42 befestigt. Mittels der Drehvorrichtung 40 kann der Maschinenbett-Kopf 14 um eine Drehachse gedreht werden, die einen Winkel von höchstens 20° mit der Horizontalen einschließt.

Das Fahrwerk 32 besitzt eine Hubvorrichtung 44, die einen ersten Hubschlitten 46.1 und einen zweiten Hubschlitten 46.2 aufweist. Mittels dieser Hubschlitten 46.1, 46.2 kann der Grundkörper auf den Boden 48 aufgesetzt werden. Nach dem Anheben des oberen Körpers 12 kann die Werkzeugmaschine 10 mittels des Fahrwerks 32 verfahren werden.

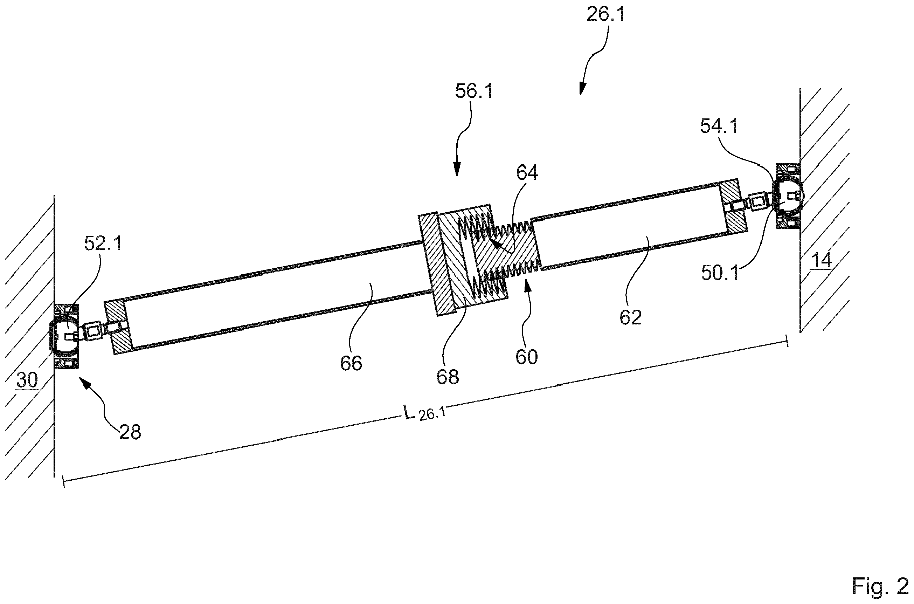

Figur 2 zeigt eine Ansicht einer Strebe 26 am Beispiel der Strebe 26.1. Es ist zu erkennen, dass der Fußboden 28.1 am Schlitten 30 befestigt ist. Ein Kopfpunkt 50.1 der Strebe 26.1 ist am Maschinenbett-Kopf 14 befestigt.

Figur 2 zeigt, dass die Strebe 26.1 am Grundkörper 12, nämlich mittels des Schlittens 30, über einem Kugelgelenk 52 befestigt ist. Die Strebe 26.1 ist zudem über ein zweites Kugelgelenk 54.1 am Maschinenbett-Kopf 14 befestigt.

Die Strebe 26.1 besitzt eine Vorspannvorrichtung 56.1, die im vorliegenden Fall einen Gewindetrieb 68. Ein Außengewinde 60 eines ersten Stabelements 62 kämmt mit einem Innengewinde 64, das an einem zweiten Stabelement 66 ausgebildet ist. Im vorliegenden Fall ist das Innengewinde 64 an einer Muffe 68 ausgebildet. Wird die Muffe 68 relativ zum ersten Stabelement 62 gedreht, so verändert sich eine Länge L_{26.1}. Dadurch verspannen sich die Streben 26.i des Stabwerks 24 (vgl. Figur 1).

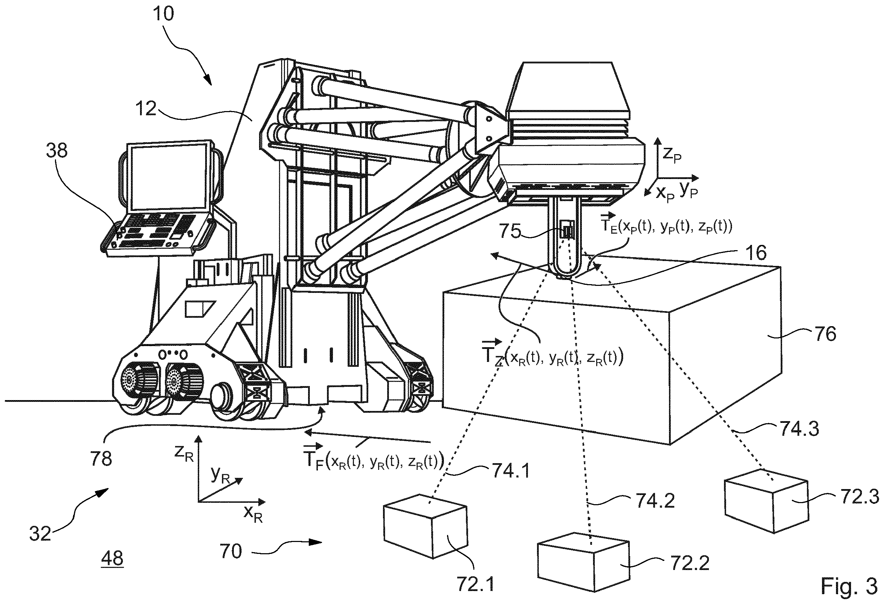

Figur 3 zeigt eine schematische Ansicht der Werkzeugmaschine 10 zum Erläutern eines erfindungsgemäßen Verfahrens. Zunächst wird das Fahrwerk 32 so angesteuert, dass sich die Werkzeugmaschine 10 relativ zum Boden entlang einer Fahrwerktrajektorie T_{F} bewegt. Zudem wird das Positioniersystem 18 so angesteuert, dass sich der Endeffektor 16 entlang einer Endeffektor-Kurve T_{E} bewegt. Die Endeffektor-Kurve T_{E} wird bezüglich eines Koordinatensystems gemessen, das fest relativ zum Maschinenbett-Kopf 14 ist. Die Fahrwerk-Trajektorie T_{F} hingegen wird relativ zu einem ortsfesten Koordinatensystem gemessen, dessen Koordinaten den Index R tragen. Es ergibt sich eine Zieltrajektorie T_{Z}, die in einem digitalen Speicher der Steuerung 38 abgelegt ist.

Die mobile Werkzeugmaschine umfasst ein Positions-Messgerät 70, im vorliegenden Fall in Form eines Tracking-Interferometers 70, das ein, zwei oder drei Lasereinheiten 72.1, 72.2 bzw. 72.3 aufweisen kann. Jede der Lasereinheiten sendet einen Laserstrahl 74.1, 74.2 bzw. 74.3 auf einen Retroreflektor 75. Auf diese Weise wird eine Endeffektor-Position Pᵢₛₜ gemessen. Die Steuerung 38 erfasst die Endeffektor-Position Pᵢₛₜ und vergleicht diese mit einer Endeffektor-Soll-Position P_{Soll}, die sich aus der Ziel-Trajektorie T_{Z} ergibt. Weicht diese Endeffektor-Soll-Position von der Endeffektor-Position Pᵢₛₜ ab, so verändert die Steuerung 38 die Endeffektor-Kurve T_{E}, sodass sich die Endeffektor-Position Pᵢₛₜ der Endeffektor-Soll-Position P_{Soll} annähert. Es sei darauf hingewiesen, dass das Tracking-Interferometer 70 lediglich dann sinnvoll ist, wenn besonders hohe Anforderungen an die Genauigkeit gestellt werden, mit der der Endeffektor 16 ein Werkstück bearbeiten soll. Für geringere Genauigkeitsanforderung, beispielsweise beim Auftragsschweißen, ist ein Tracking-Interferometer 70 entbehrlich.

Zur Bearbeitung des Werkstücks 76 mit hoher Genauigkeit wird das Fahrwerk 32 so angesteuert, dass es sich absenkt und in einer Absetz-Position kommt. Diese Absetz-Position sitzt der Grundkörper in einer Aufsetzfläche 78 auf dem Boden 48 auf.

Es wird dann die Endeffektor-Position Pᵢₛₜ des Endeffektors 16 relativ zum Werkstück 76 bestimmt, insbesondere mittels des Tracking-Interferometers 70. Danach wird das Werkstück 76 mittels des Endeffektors 16 bearbeitet. Es ist günstig, nicht aber notwendig, wenn das Tracking-Interferometer die Bewegung des Endeffektors verfolgt und dessen Endeffektor-Position Pᵢₛₜ beständig auf dessen jeweilige Endeffektor-Soll-Position P_{Soll} geregelt wird.

**Bezugszeichenliste**

| | | | |
|---|---|---|---|
| 10 | Werkzeugmaschine | 64 | Innengewinde |
| 12 | Grundkörper | 66 | zweites Stabelement |
| 14 | Maschinenbett-Kopf | 68 | Muffe |
| 16 | Endeffektor | | |
| 18 | Positioniersystem | 70 | Tracking-Interferometer |
| | | 72 | Lasereinheit |
| 20 | Linearachse | 74 | Laserstrahl |
| 22 | Dreheinheit | 75 | Retroreflektor |
| 24 | Stabwerk | 76 | Werkstück |
| 26 | Strebe | 78 | Aufsetzfläche |
| 28 | Fußpunkt | | |
| 30 | Schlitten | i, j | Laufindex |
| 32 | Fahrwerk | L₂₆ | Länge einer Strebe |
| 34 | Mecanum-Rad | N | Zahl der Streben |
| 36 | Elektromotor | P_{Soll} | Endeffektor-Soll-Position |
| 38 | Steuerung | Pᵢₛₜ T_{F} | Endeffektor-Position Fahrwerk-Trajektorie |
| 40 | Drehvorrichtung | T_{E} | Endeffektor-Kurve |
| 42 | Teil | T_{Z} | Ziel-Trajektorie |
| 44 | Hubvorrichtung | | |
| 46 | Hubschlitten | | |
| 48 | Boden | | |
| 50 | Kopfpunkt | | |
| 52 | Kugelgelenk | | |
| 54 | zweites Kugelgelenk | | |
| 56 | Vorspannvorrichtung | | |
| 58 | Gewindetrieb | | |
| 60 | Außengewinde | | |
| 62 | Stabelement | | |

## Patentansprüche

1. Mobile Werkzeugmaschine (10) mit
(a) einem Grundkörper (12), mit dem die Werkzeugmaschine (10) auf dem Boden (48) steht,
(b) einem Maschinenbett-Kopf (14), der relativ zum Grundkörper (12) auskragend befestigt ist, und
(c) einem Endeffektor (16), der mittels eines Positioniersystems (18) am Maschinenbett-Kopf (14) geführt ist,
**dadurch gekennzeichnet, dass**
(d) der Maschinenbett-Kopf (14) mittels eines mechanisch überbestimmten Stabwerks (24) am Grundkörper (12) befestigt ist.

2. Mobile Werkzeugmaschine (10) nach Anspruch 1, **dadurch gekennzeichnet, dass**
(a) sich zumindest zwei Streben (26) in ihren Eigenfrequenzen um zumindest 7% unterscheiden und
(b) dass das Stabwerk (24) zumindest zweifach mechanisch überbestimmt ist.

3. Mobile Werkzeugmaschine (10) nach einem der vorstehenden Ansprüche,
**dadurch gekennzeichnet, dass** zumindest eine der Streben (26) eine Vorspannvorrichtung (56) aufweist, mittels der die Strebe (26) gegen die anderen Streben (26) verspannbar ist.

4. Mobile Werkzeugmaschine (10) nach einem der vorstehenden Ansprüche,
**dadurch gekennzeichnet, dass** zumindest vier Streben (26) am Grundkörper (12), insbesondere mittels Kugelgelenken (52), angelenkt sind.

5. Mobile Werkzeugmaschine (10) nach einem der vorstehenden Ansprüche,
**dadurch gekennzeichnet, dass** das Positioniersystem (18) zumindest drei Achsen aufweist.

6. Mobile Werkzeugmaschine (10) nach einem der vorstehenden Ansprüche, **gekennzeichnet durch**
eine Drehvorrichtung (40), mittels der der Maschinenbett-Kopf (14) relativ zum Grundkörper (12), insbesondere um zumindest 170°, drehbar gelagert ist.

7. Mobile Werkzeugmaschine (10) nach einem der vorstehenden Ansprüche, **gekennzeichnet durch** ein Fahrwerk (32), mittels dem die Werkzeugmaschine (10) bewegbar ist.

8. Mobile Werkzeugmaschine (10) nach Anspruch 7, **dadurch gekennzeichnet, dass**
das Fahrwerk (32) vorzugsweise zumindest ein Mecanum-Rad (34) und/oder ein Allseitenrad hat.

9. Mobile Werkzeugmaschine (10) nach Anspruch 7 oder 8, **gekennzeichnet durch** eine Steuerung (38), die eingerichtet ist zum automatischen Durchführen eines Verfahrens mit den Schritten:
(i) Erfassen einer Ziel-Trajektorie (T_{Z}) des Endeffektors (16) im Raum,
(ii) Ansteuern des Fahrwerks (32), sodass sich die Werkzeugmaschine (10) entlang einer Fahrwerk-Trajektorie (T_{F}) im Raum bewegt und
(iii) Ansteuern des Positioniersystems (18), sodass sich der Endeffektor (16) entlang einer Endeffektor-Kurve (T_{E}) relativ zum Maschinenbett-Kopf (14) bewegt, sodass sich der Endeffektor (16) entlang der Ziel-Trajektorie (T_{Z}) im Raum bewegt.

10. Mobile Werkzeugmaschine (10) nach einem der Ansprüche 7 bis 9, **gekennzeichnet durch** ein Positions-Messgerät (70), insbesondere einTracking-Interferometer (70), das ausgebildet ist zum Bestimmen einer Endeffektor-Position (Pᵢₛₜ) im Raum relativ zu einem Werkstück (76).

11. Mobile Werkzeugmaschine (10) nach einem der Ansprüche 7 bis 10, **dadurch gekennzeichnet, dass** die Steuerung (38) eingerichtet ist zum automatischen Durchführen eines Verfahrens mit den Schritten:
(i) kontinuierlich Erfassen einer Endeffektor-Position (Pᵢₛₜ) des Endeffektors (16) im Raum mittels des Tracking-Interferometers (70) und
(ii) Regeln der Endeffektor-Position (Pᵢₛₜ) auf eine Endeffektor-Soll-Position (P_{Soll}) gemäß der Ziel-Trajektorie (T_{Z}) mittels des Positioniersystems (18).

12. Werkzeugmaschine (10) nach einem der Ansprüche 7 bis 10, **dadurch gekennzeichnet, dass** die Steuerung (38) eingerichtet ist zum automatischen Durchführen eines Verfahrens mit den Schritten:
(i) Ansteuern des Fahrwerks (32), sodass die Werkzeugmaschine (10) sich relativ zum Boden (48) bewegt,
(ii) Ansteuern des Fahrwerks (32), sodass der Grundkörper (12) auf den Boden (48) gestellt wird,
(iii) Bestimmen einer Endeffektor-Position (Pᵢₛₜ) des Endeffektors (16) relativ zu einem Werkstück (76) und
(iv) Bearbeiten, insbesondere spanendes Bearbeiten, des Werkstücks (76) mittels des Endeffektors (16).

13. Mobile Werkzeugmaschine (10) nach einem der vorstehenden Ansprüche, **gekennzeichnet durch**
(a) zumindest ein am Grundkörper (12) lösbar befestigtes Beschwerungselement,
(b) wobei das zumindest eine Beschwerungselement eine Dichte von zumindest 1,5 g/cm³, insbesondere zumindest 7,5 g/cm³, hat und/oder eine Masse von zumindest 300 kg, insbesondere zumindest 500 kg.
